# EUROPÄISCHE PATENTSCHRIFT

(11) **EP 1 563 938 B1**
(45) Veröffentlichungstag und Bekanntmachung des Hinweises auf die Patenterteilung: **25.03.2009**
(21) Anmeldenummer: 05001503.1
(22) Anmeldetag: 26.01.2005
(51) Int. Cl.: B23K 9/095

(54) **Verfahren zur Steuerung eines Schweissgerätes zum MSG (Metall-Schutzgas-Lichtbogen)-Schweissen**
Protecting gas welding control method and apparatus
Procédé et dispositif de contrôle de soudage avec gaz de protection

(30) Priorität: 13.02.2004 DE 102004007059
(43) Veröffentlichungstag der Anmeldung: 17.08.2005
(73) Patentinhaber: EWM Hightec Welding GmbH, 56271 Mündersbach (DE)
(72) Erfinder: Szczesny, Michael, 56235 Ransbach-Baumbach (DE)
(74) Vertreter: Cohausz & Florack

(56) Entgegenhaltungen:
- EP-A- 0 743 126
- US-B1- 6 388 232

## Beschreibung

Die Erfindung betrifft ein Verfahren zur Steuerung eines Schweißgerätes zum MSG (Metall-Schutzgas-Lichtbogen)-Schweißen gemäß dem Oberbegriff des Anspruchs 1, bei dem mittels einer wechselweise getakteten Inverterstromquelle mindestens ein Strompfad zur Versorgung des Schweißprozesses gebildet wird, wobei in dem mindestens einen Strompfad eine der Inverterspannung bei aufsteigender Schweißstromflanke entgegengerichtete Gegenspannungsquelle in Reihe steuerbar zugeschaltet wird sowie eine zur Durchführung dieses Verfahrens geeignete Vorrichtung. Derartige Verfahren und Schweißgeräte sind in der EP-A-0 743 126 B1 offenbart.

Metall-Schutzgas-Lichtbogenschweißen (MSG-Schweißen) wird zum Auftragsschweißen, Verschweißen oder Verlöten von ein oder mehreren Fügepartnern aus metallischen Werkstoffen eingesetzt. Dabei wird in einer Schutzgasatmosphäre der Zusatzwerkstoff in Form eines Drahtes oder eines Bandes in einem von einer elektrischen Schweißstromquelle erzeugten Lichtbogen abgeschmolzen. Der Schweißprozeß ist dabei charakterisiert durch eine Lichtbogenbrennphase und eine Kurzschlußphase. In der Lichtbogenbrennphase wird am Elektrodenende ein schmelzflüssiger Tropfen erzeugt. Aufgrund der stetigen Drahtzufuhr und dem wachsenden Tropfenvolumen berührt der Tropfen nach einer gewissen Zeit das Schmelzbad. In dieser damit beginnenden Kurzschlußphase wird der Tropfen durch den sich einstellenden hohen Kurzschlußstrom abgeschnürt und der Lichtbogen zündet neu. Dabei findet ein Werkstoffübergang ausschließlich in der Kurzschlußphase statt. Dauer der Kurzschlußphase und auch die Höhe des Stromes sind beim Aufreißen eines Kurzschlusses und Wiederzünden des Lichtbogens schwer definierbar. Am Ende der Kurzschlußphase treten dabei sowohl ein hoher Strom als auch eine hohe Schweißprozeßspannung auf, was zu einem schlagartigen Aufreißen des Tropfens und infolgedessen zu ungewünschten "Schweißspritzern" führt.

Aus der DE 101 20 744 A1 ist es bekannt, den oben beschriebenen Nachteilen beim Aufreißen der Kurzschlußbrücke und Wiederzünden des Lichtbogens dadurch entgegenzutreten, dass beim Beginn der Kurzschlußphase eine während der Kurzschlußdauer aktive Regelung zur Verfügung gestellt wird, die den Energieeintrag zwischen zwei Schwellwertniveaus erhöht bzw. verringert. Der Energieanstieg beim Unterschreiten eines ersten charakteristischen Schwellwertes bzw. der Energieabfall beim Erreichen eines anderen charakteristischen Schwellwertes kann dabei nach bestimmten mathematischen Funktionen, insbesondere dem Verlauf eines Sägezahnes folgend, erfolgen. Hierdurch lassen sich statistisch betrachtet vermehrt Zustände für den Tropfenübergang einstellen, bei denen sich der Strom in einer abfallenden Phase befindet, wodurch sich die Spritzerbildung herabsetzen läßt. Allerdings lassen sich bei dieser bekannten Lösung Spritzerbildungen vor allem dann nicht vermeiden, wenn der Tropfenübergang auch in Phasen ansteigenden Stromes erfolgt.

Aus der EP 0 743 126 B1 ist eine Inverterstromquelle bekannt, bei der während der abfallenden Schweißstromflanke eine Gegenspannungsquelle einem sekundärseitigen Strompfad in Reihe zuschaltbar ist, deren Polarität so gerichtet ist, dass sich ihr Spannungswert während der abfallenden Flanke zur Schweißprozeßspannung hinzu addiert.

Der Erfindung liegt die Aufgabe zugrunde, eine Schweißenergiequelle bzw. ein Verfahren zu schaffen, durch welches sich eine möglichst geringe Spritzerbildung erreichen läßt.

Diese Aufgabe wird bei einem Verfahren der eingangs genannten Art dadurch gelöst, dass synchronisiert mit der Taktfrequenz der Inverterstromquelle, für den Augenblickswert der Schweißprozeßspannung repräsentative Messwerte erfasst werden und dass beim Erreichen einer ersten Vorgabebedingung für den Augenblickswert der Schweißprozeßspannung die Gegenspannung zugeschaltet wird.

Bei einem Schweißgerät einer Vorrichtung der eingangs genannten Art wird diese Aufgabe erfindungsgemäß dadurch gelöst, dass von der Taktfrequenz der Inverterstromquelle angesteuerte Synchronisierungsmittel vorgesehen sind, durch welche sowohl Detektormittel zur Erfassung einer für den Augenblickswert der Schweißprozeßspannung repräsentativen Größe als auch die Steuermittel angesteuert werden, wobei den Steuermitteln erste Vorgabemittel derart zugeordnet sind, dass die Zuschaltung der Gegenspannungsquelle abhängig von einem Vorgabewert für die für den Augenblickswert der Schweißprozeßspannung repräsentativen Größe erfolgt.

Die erfindungsgemäße Lösung zeichnet sich dadurch aus, dass die Messung der Schweißspannung synchronisiert mit der Taktfrequenz des Inverters erfolgt, so dass die für den Augenblickswert der Schweißprozeßspannung repräsentativen Meßwerte taktgenau verfügbar sind und dass in Abhängigkeit von dem gemessenen Augenblickswert der Schweißprozeßspannung das Zuschalten der Gegenspannung erfolgt, und zwar zeitgenau, um in der Kurzschlußphase einen schnelleren Abfall des Schweißstromes zu erreichen. Hierdurch wird die Schweißspritzerbildung merklich reduziert.

Dabei sieht die erfindungsgemäße Lösung zwei Varianten zur Erfassung der Schweißspannungsaugenblickswerte vor. Zum einen kann die Erfassung in den Pulspausenbereichen der Inverterausgangsspannung erfolgen und ist somit ein direktes Mass für den Augenblickswert der Schweißprozeßspannung.

Eine Alternative dazu ist, dass als repräsentative Größe für den Augenblickswert der Schweißprozeßspannung die Pulsbreite t1 der Ausgangsspannung des Inverters herangezogen wird.

Beiden Varianten ist gemeinsam, dass nach der Erfassung der Messwerte für den Augenblickswert der Schweißprozeßspannung beim Erreichen einer ersten Vorgabebedingung, d.h. eines "Auslösekriteriums für die Gegenspannung", die Gegenspannung zugeschaltet wird. Diese Vorgabebedingung kann entsprechend den Prozeßbedingungen frei gewählt werden.

Vorteilhafte Lösungen für die Festlegung der ersten Vorgabebedingung ergeben sich beispielsweise dann, wenn zwei aufeinanderfolgende Messwerte miteinander verglichen werden und eine zulässige Differenz überschritten wird. Als ein anderes mögliches Auslösekriterium kann auch der Absolutwert der augenblicklichen Schweißprozeßspannung angesehen werden. Dazu wird dieser als Sollwert in einer Sollwert-Vorgabeinrichtung vorgegeben und über eine Vergleicherschaltung mit den erfaßten Augenblickswerten verglichen und im Falle eines Erreichens die Gegenspannung zugeschaltet. Alternativ dazu ist es auch möglich, ein bestimmtes Spannungszeitprofil für die Schweißprozeßspannung vorzugeben.

Weitere bevorzugte Ausgestaltungen ergeben sich aus den Unteransprüchen.

Von besonderer vorteilhafter Bedeutung für die Erfindung ist es, dass die Amplitude der Gegenspannung im Bereich zwischen dem Wert 0V und einem oberen Grenzwert einstellbar ist. Hierdurch wird die Steilheit di/dt des abfallenden Schweißstromes beeinflußt und somit unmittelbar auf die Spritzerbildung Einfluß genommen.

Erfindungsgemäß können mehrere Kriterien zum Erreichen der ersten Vorgabebedingung für das Zuschalten der Gegenspannung kumulativ miteinander verknüpft werden.

Das Abschalten der Gegenspannung wird beim Erreichen einer zweiten Vorgabebedingung "(Abschaltekriterium") ausgelöst, welche mit der Höhe des Schweißstromes verknüpft ist. Dabei sieht die Erfindung in der einfachsten Ausgestaltung vor, dass die Höhe des Schweißstromes das alleinige Kriterium ist. Alternativ dazu kann aber auch das Produkt bzw. der Quotient aus Schweißstrom und Schweißprozeßspannung als Auslösekriterium vorgesehen sein.

Auch können andere Prozeßparameter, wie Lichtstrahlung, Schall, elektrisches Feld oder magnetisches Feld mit verknüpft sein.

Die Erfindung wird im Folgenden anhand eines Ausführungsbeispieles näher erläutert. Dabei zeigen
- Fig. 1: das Blockschaltbild einer Schweißstromquelle nach Ausführungsbeispiel der Erfindung,
- Fig. 2/3: mit den unterschiedlichen Phasen des Schweißprozesses korrelierte zeitliche Verläufe der Prozeßspannung U_{S} und des Schweißstromes I_{S}
beim Stand der Technik (Fig. 2)
nach der erfindungsgemäßen Lösung (Fig. 3) und
- Fig. 4: den zeitlichen Verlauf der Inverterausgangsspannung.

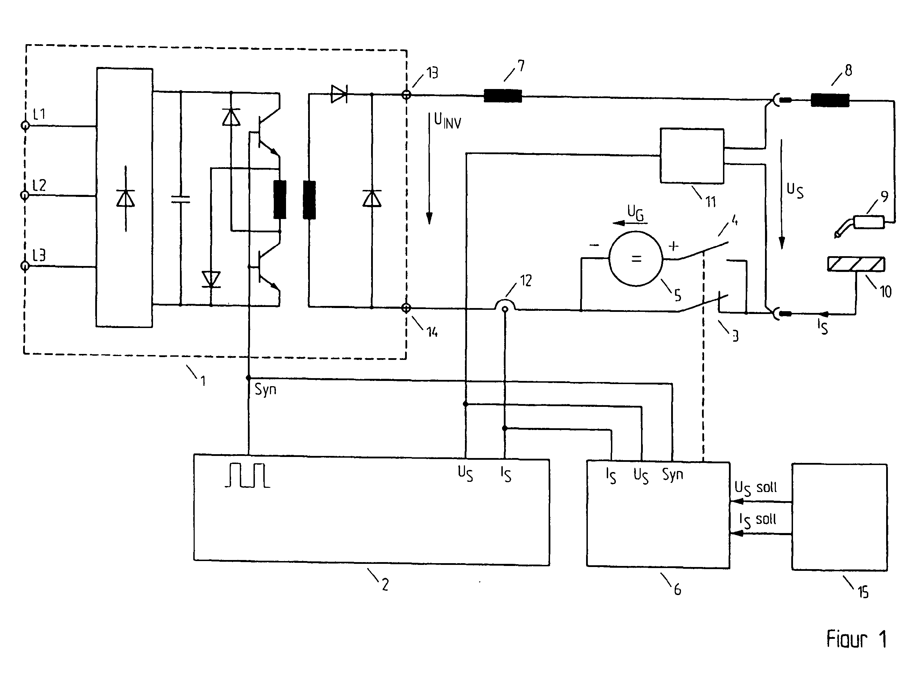

Das in Figur 1 dargestellte Blockschaltbild für ein Schweißgerät gemäß dem Ausführungsbeispiel der Erfindung zeigt zunächst eine allgemein mit dem Bezugszeichen 1 bezeichnete Inverterstromquelle, die aus einem wechselstromgespeisten Gleichrichter, einem Zwischenkreis sowie einem primärseitig wechselseitig getaktetem Stromwandler besteht, welcher sekundärseitig einen Strompfad aufweist, welcher zur Speisung des Schweißprozesses 9,10 dient. Gegenüber der auf einem Bezugspotential liegenden Gegenelektrode 10 ist mit 9 die Schweißelektrode bezeichnet. Im sekundärseitigen Strompfad der Inverterstromquelle 1 ist eine Gleichrichterdiode vorgesehen.

Im Schweißstromkreis liegt zunächst eine Drossel 7 sowie die die Leitungsinduktivität der Zuleitung zum Schweißprozeß darstellende weitere Induktivität 8. Zur Entladung der aus den Induktivitäten 7 und 8 gebildeten Gesamtinduktivität während des Rückstromes dient eine Freilaufdiode.

In Reihe zum Schweißprozeß 9,10 ist eine Gleichspannungsquelle 5 vorgesehen, deren Polarität, gekennzeichnet durch die Zeichen +,- so gewählt ist, dass die während der abfallenden Flanke des Schweißstromes gleichsinnig gerichtet ist zu der am Schweißprozeß 9,10 anliegenden Spannung. Über das Schalterpaar 3,4 kann die Gegenspannungsquelle 5 zugeschaltet bzw. überbrückt werden, wobei bei der Überbrückung der Schalter 3 geschlossen und der Schalter 4 geöffnet und bei Wirksamkeit der Gegenspannungsquelle 5 der Schalter 3 geöffnet bzw. der Schalter 4 geschlossen ist.

Das Öffnen bzw. Schließen der Schalter 3,4 wird durch eine Steuereinheit 6 bestimmt, welcher eine Vorgabeeinheit 15 zur Vorgabe von Sollwerten U_{Ssoll}, I_{Ssoll} zugeordnet ist. Parallel zur Steuereinheit 6 ist eine Synchronisiereinheit 2 vorgesehen, welche mit der Taktfrequenz der Inverterstromquelle 1 synchronisiert ist. An den Eingang der Synchronisiereinrichtung 2 gelangt das Ausgangssignal einer ersten Detektoreinrichtung 11, welche die Schweißprozeßspannung U_{S} unmittelbar an den äußeren Anschlußleitungen des Schweißprozesses 9,10 erfaßt. Über eine weitere Detektoreinrichtung 12 wird der Istwert des Schweißstromes I_{S} ebenfalls jeweils als Augenblickswert erfaßt und an die Synchronisiereinrichtung 2 übertragen. Die Augenblickswerte der Schweißprozeßspannung U_{S} bzw. des Schweißstromes I_{S} liegen ebenso an der Steuereinrichtung 6 an. Die Vorgabeeinrichtung 15 weist Sollwerte für die Schweißprozeßspannung U_{S} bzw. den Schweißstrom I_{S} auf. Diese Sollwerte werden in Zusammenhang mit den Prozeßvorgaben, z.B. dem Drahtdurchmesser, dem Schweißelektrodenmaterial, dem Schweißgas oder dem verwendeten Schweißverfahren abgeleitet.

Die erfindungsgemäße Vorrichtung arbeitet wie folgt:

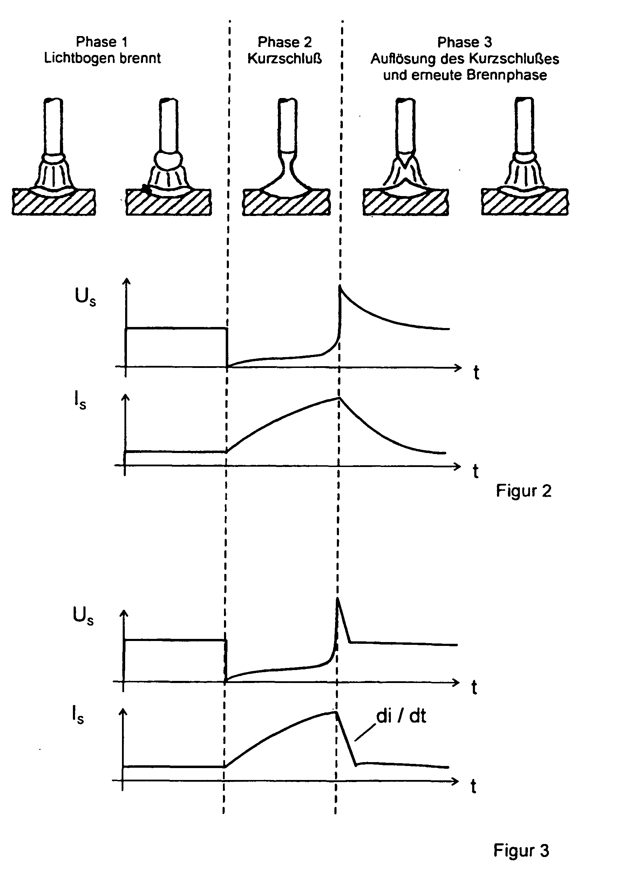

Zunächst zeigt Figur 2, dass in einer ersten Prozeßphase, in der der Lichtbogen brennt (Phase 1, Brennphase), jedoch noch kein Materialübertrag zwischen Schweißelektrode und Werkstück erfolgt, ein nahezu konstanter Schweißstrom und eine nahezu konstante Schweißprozeßspannung vorhanden sind. Im Moment der Verflüssigung des Tropfens, also zu Beginn der Kurzschlußphase (Phase 2) bricht die Schweißprozeßspannung zusammen und der Schweißstrom beginnt, einen Anstieg vorzunehmen. Im Verlaufe der Kurzschlußphase kommt es zu einer Einschnürung des Tropfens und zum Ende der Kurzschlußphase hin zum sogenannten Tropfenübergang, der den Beginn der Phase 3 einleitet und dem sich eine erneute Brennphase anschließt. Beim Tropfenübergang ist der hohe Anstieg der Schweißprozeßspannung bei gleichzeitig hohem Schweißstrom zu erkennen.

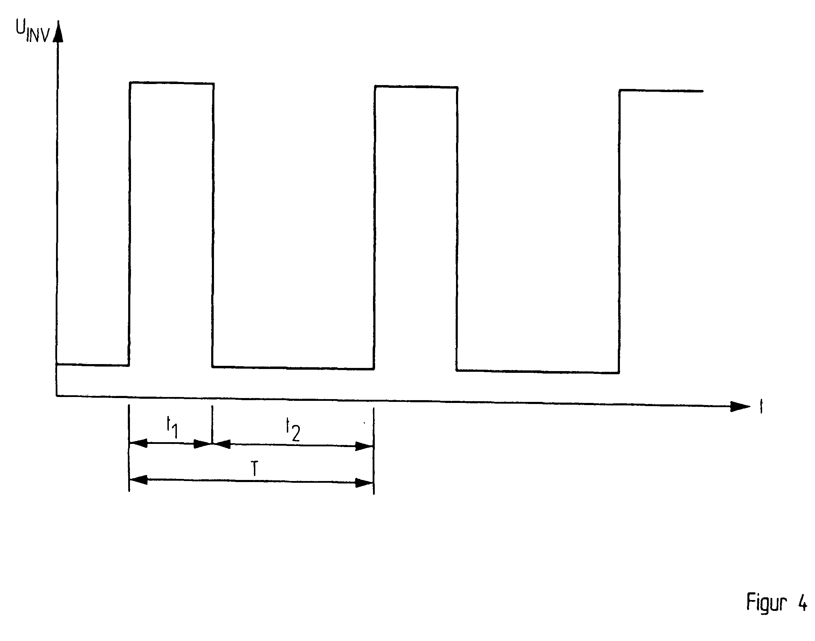

Die erfindungsgemäße Lösung sieht nun vor, dass eine Spannungsmessung der Schweißspannung U_{S} synchronisiert mit der Taktfrequenz der Inverterstromquelle erfolgt, deren Ausgangsspannung in Figur 4 dargestellt ist. Die Inverterspannung weist eine Periodendauer T mit Pulsen der Breite t1 und eine Pause zwischen den Pulsen der Breite t2 auf. Wenn gemäß dem bevorzugten Ausführungsbeispiel der Erfindung die Messung der Augenblicksspannung U_{S} synchronisiert mit der Taktfrequenz der Inverterspannung stets innerhalb der zeitlichen Phase t2 erfolgt, sind die Meßwerte, die in der Steuereinrichtung 6 erfaßt und abgespeichert werden, immer ein Maß für die augenblickliche Schweißprozeßspannung. Wird nun am Verlauf dieser Meßwerte ein bestimmter Anstieg beobachtet, so deutet dies den nahenden Tropfenübergang, d.h. das nahende Ende der Phase 2 an. Durch die geeignete Festlegung der ersten Vorgabebedingung ("Auslösekriterium") wird möglichst genau zum Zeitpunkt des Tropfenübergangs die Gegenspannung in den Strompfad zugeschaltet. Nach dem Zuschalten der Gegenspannung sinken sowohl Spannung als auch Strom ab. Dabei kann durch die Amplitude der Gegenspannung U_{G} die Steilheit der abfallenden Flanke des Schweißstromes eingestellt werden.

Figur 3 zeigt die sich aus dieser Verfahrensweise ergebenden Unterschiede gegenüber Figur 2 im zeitlichen Verlauf sowohl der Schweißprozeßspannung U_{S} als auch des Schweißstromes I_{S}: Da die Schweißprozeßspannung infolge der Gegenspannung U_{G} zum Zeitpunkt der Auflösung des Kurzschlusses schneller herabgesetzt wird, vergrößert sich auch der Abfall des Schweißstromes in Abhängigkeit vom Amplitudenwert der Gegenspannung. Eine Vergrößerung der Steilheit di/dt des abfallenden Schweißstromes bewirkt dabei eine deutliche Herabsetzung der Schweißspritzerbildung.

Als "Auslösekriterium" für das Zuschalten der Gegenspannung können dabei von der Vorgabeeinrichtung 15 verschiedene Bedingungen festgelegt werden. Dies kann entweder der Absolutwert der Augenblicksspannung sein, so dass, wenn dieser bestimmte Wert überschritten wird, die Zuschaltung der Gegenspannungsquelle erfolgt. Alternativ dazu kann auch eine bestimmte zulässige Differenz zweier benachbarter Messwerte vorgegeben werden.

Als Variante zur Detektierung der Schweißprozeßspannung am Anschlußpunkt für die äußeren Anschlußleitungen mittels der Detektoreinrichtung 11 kann nach einem nicht dargestellten anderen Ausführungsbeispiel der Erfindung vorgesehen sein, dass die Erfassung dieser Spannung auch direkt am Schweißprozeß 9,10 erfolgt.

## Patentansprüche

1. Verfahren zur Steuerung eines Schweißgerätes zum MSG (Metall-Schutzgas-Lichtbogen)-Schweißen, bei dem mittels einer wechselweise getakteten Inverterstromquelle mindestens ein Strompfad zur Versorgung des Schweißprozesses (9,10) gebildet wird, wobei in dem mindestens einen Strompfad eine der Inverterspannung (Uᵢₙᵥ) bei aufsteigender Schweißstromflanke entgegengerichtete Gegenspannungsquelle (5) in Reihe steuerbar zugeschaltet wird,
wobei synchronisiert mit der Taktfrequenz der Inverterstromquelle, Messwerte des Augenblickswertes der Schweißprozessspannung erfasst werden **dadurch gekennzeichnet, dass** beim Erreichen einer ersten Vorgabebedingung für den Augenblickswert der Schweißprozeßspannung die Gegenspannung zugeschaltet wird.

2. Verfahren zur Steuerung eines Schweißgerätes zum MSG (Metall-Schutzgas-Lichtbogen)-Schweißen, nach Anspruch 1, **dadurch gekennzeichnet, dass** als Messwert des Augenblickswertes der Schweißprozeßspannung der momentane Schweißspannungswert in der Pulspause (t2) der Inverterspannung erfasst wird.

3. Verfahren zur Steuerung eines Schweißgerätes zum MSG (Metall-Schutzgas-Lichtbogen)-Schweißen, nach Anspruch 1, **dadurch gekennzeichnet, dass** für den Messwert des Augenblickswertes der Schweißspannung die Breite des Pulses (t1) der Inverterspannung erfasst wird.

4. Verfahren zur Steuerung eines Schweißgerätes zum MSG (Metall-Schutzgas-Lichtbogen)-Schweißen, nach Anspruch 1, **dadurch gekennzeichnet, dass** die Amplitude der Gegenspannung im Bereich von 0V bis zu einem oberen Grenzwert einstellbar ist.

5. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung erst beim Erreichen einer zusätzlichen ersten Vorgabebedingung für den Augenblickswert des Schweißstromes zugeschaltet wird.

6. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung erst beim Erreichen einer zusätzlichen ersten Vorgabebedingung für das Produkt der Augenblickswerte von Schweißspannungswert und Schweißstrom zugeschaltet wird.

7. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung erst beim Erreichen einer zusätzlichen ersten Vorgabebedingung für den Quotienten der Augenblickswerte von Schweißspannungswert und Schweißstrom zugeschaltet wird.

8. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung erst beim Erreichen einer zusätzlichen ersten Vorgabebedingung für das Produkt des Augenblickswertes der Schweißspannungswert und der Breite des Pulses (t1) der Schweißspannungswert zugeschaltet wird.

9. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung erst beim Erreichen einer zusätzlichen ersten Vorgabebedingung für das Produkt des Augenblickswertes der Schweißspannungswert und der Breite der Pulspause (t2) der Schweißspannungswert zugeschaltet wird.

10. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung erst beim Erreichen einer zusätzlichen ersten Vorgabebedingung für vorbestimmte Prozessparameter, insbesondere Lichtstrahlung, Schall, elektrisches Feld oder magnetisches Feld erfolgt.

11. Verfahren zur Steuerung eines Schweißgerätes zum MSG (Metall-Schutzgas-Lichtbogen)-Schweißen, nach Anspruch 1, **dadurch gekennzeichnet, dass** die Gegenspannung beim Erreichen einer zweiten Vorgabebedingung abgeschaltet wird.

12. Verfahren zur Steuerung eines Schweißgerätes zum MSG (Metall-Schutzgas-Lichtbogen)-Schweißen, nach Anspruch 11, **dadurch gekennzeichnet, dass** die zweite Vorgabebedingung von der Amplitude des Augenblickswertes des Schweißstromes bestimmt ist.

13. Verfahren zur Steuerung eines Schweißgerätes zum MSG (Metall-Schutzgas-Lichtbogen)-Schweißen, nach Anspruch 11, **dadurch gekennzeichnet, dass** die zweite Vorgabebedingung von dem Produkt der Augenblickswerte von Schweißspannungswert und Schweißstrom bestimmt ist.

14. Verfahren zur Steuerung eines Schweißgerätes zum MSG (Metall-Schutzgas-Lichtbogen)-Schweißen, nach Anspruch 11, **dadurch gekennzeichnet, dass** die zweite Vorgabebedingung von dem Quotienten der Augenblickswerte von Schweißspannungswert und Schweißstrom bestimmt ist.

15. Verfahren zur Steuerung eines Schweißgerätes zum MSG (Metall-Schutzgas-Lichtbogen)-Schweißen, nach Anspruch 11, **dadurch gekennzeichnet, dass** die zweite Vorgabebedingung von vorbestimmten Prozessparametern, insbesondere Lichtstrahlung, Schall, elektrisches Feld oder magnetisches Feld bestimmt ist.

16. Verfahren zur Steuerung eines Schweißgerätes zum MSG (Metall-Schutzgas-Lichtbogen)-Schweißen, nach einem der vorgenannten Ansprüche,
**dadurch gekennzeichnet, dass** die Bildung der Funktionen für die Vorgabebedingungen mindestens teilweise durch Software erfolgt.

17. Verfahren zur Steuerung eines Schweißgerätes zum MSG (Metall-Schutzgas-Lichtbogen)-Schweißen, nach einem der vorgenannten Ansprüche,
**dadurch gekennzeichnet, dass** die Inverterstromquelle stromgeregelt ist.

18. Verfahren zur Steuerung eines Schweißgerätes zum MSG (Metall-Schutzgas-Lichtbogen)-Schweißen, nach einem der vorgenannten Ansprüche 1 bis 16,
**dadurch gekennzeichnet, dass** die Inverterstromquelle spannungs-, leistungs- oder widerstandsgeregelt ist.

19. Verfahren zur Steuerung eines Schweißgerätes zum MSG (Metall-Schutzgas-Lichtbogen)-Schweißen, nach einem der vorgenannten Ansprüche,
**dadurch gekennzeichnet, dass** die Inverterstromquelle in unterschiedlichen Prozeßphasen mit unterschiedlichen Regelungsarten arbeitet.

20. Schweißgerät zum MSG (Metall-Schutzgas-Lichtbogen) Schweißen mit einer wechselstromgespeisten wechselweise getakteten Inverterstromquelle, die mindestens einen Strompfad zur Versorgung eines Schweißprozesses (9, 10) speist, wobei in Reihe zum Schweißprozess eine Gleichrichterdiode und mindestens eine Drossel (7,8) und parallel zum Schweißprozess eine Freilaufdiode vorgesehen sind, und wobei innerhalb des mindestens einen Strompfades über Steuermittel (6) eine der Inverterspannung (Uinv) bei aufsteigender Schweißstromflanke entgegengerichtete Gegenspannungsquelle (5) in Reihe zuschaltbar ist,
wobei von Taktfrequenz der Inverterstromquelle angesteuerte Synchronisierungsmittel (2) vorgesehen sind, durch welche sowohl Detektormittel (11) zur Erfassung eines Messwertes des Augenblickswertes der Schweißprozeßspannung als auch die Steuermittel (6) angesteuert werden, **dadurch gekennzeichnet**, den Steuermitteln (6) Vorgabemittel (15) derart zugeordnet sind, dass die Zuschaltung der Gegenspannungsquelle abhängig von einem ersten von dem Augenblickswert der Schweißprozeßspannung abhängigen Vorgabewert erfolgt.

21. Schweißgerät nach Anspruch 20,
**dadurch gekennzeichnet, dass** die Detektormittel (11) zusätzlich/alternativ zur Erfassung eines Messwertes des Augenblickswertes des Schweißstromes ausgebildet sind.

22. Schweißgerät nach Anspruch 20,
**dadurch gekennzeichnet, dass** die Detektormittel (11) zusätzlich/alternativ zur Erfassung einer für den Augenblickswert der Schweißprozessspannung direkt am Schweißprozess ausgebildet sind.

23. Schweißgerät nach Anspruch 20,
**dadurch gekennzeichnet, dass** Steuermittel (6) und/oder Synchronisierungsmittel (2) und/oder Vorgabemittel (15) jeweils in einem Mikrocontroller, vorzugsweise einem DSP (Digitaler Signalprozessor) untergebracht sind.

24. Schweißgerät nach Anspruch 20,
**dadurch gekennzeichnet, dass** die Steuermittel (6) Halbleiterschalter (3,4), insbesondere IGBT's, aufweis

## Claims

1. A method for controlling a welding device for MSG (gas metal arc) welding, in which an alternately clocked inverter power source forms at least one current path for supplying power to the welding process (9, 10), wherein a countervoltage source (5) inverse to the inverter voltage (Uinv) given a rising welding current flank is controllably connected in series in the at least one current path, wherein measured values for the instantaneous value of the welding process voltage are acquired synchronized with the clock frequency of the inverter power source, **characterized in that** the countervoltage is turned off after a first predetermined condition has been reached for the instantaneous value of the welding process voltage.

2. The method for controlling a welding device for MSG (gas metal arc) welding according to claim 1, **characterized in that** the current welding voltage value in the pulse pause (t2) of the inverter voltage is acquired as the instantaneous value of the welding process voltage.

3. The method for controlling a welding device for MSG (gas metal arc) welding according to claim 1, **characterized in that** the width of the pulse (t1) of the inverter voltage is acquired as the measured value of the instantaneous value of the welding voltage.

4. The method for controlling a welding device for MSG (gas metal arc) welding according to claim 1, **characterized in that** the amplitude of the countervoltage can be set from 0 V to an upper limit.

5. The method for controlling a welding device for MSG (gas metal arc) welding according to claim 1, **characterized in that** the countervoltage is only connected once an additional first predefined condition has been reached for the instantaneous value of the welding current.

6. The method for controlling a welding device for MSG (gas metal arc) welding according to claim 1, **characterized in that** the countervoltage is only connected once an additional first predefined condition has been reached for the product of the instantaneous values of the welding voltage value and welding current.

7. The method for controlling a welding device for MSG (gas metal arc) welding according to claim 1, **characterized in that** the countervoltage is only connected once an additional first predefined condition has been reached for the quotient of the instantaneous values of the welding voltage value and welding current.

8. The method for controlling a welding device for MSG (gas metal arc) welding according to claim 1, **characterized in that** the countervoltage is only connected once an additional first predefined condition has been reached for the product of the instantaneous value of the welding voltage value and the width of the pulse (t1) of the welding voltage value.

9. The method for controlling a welding device for MSG (gas metal arc) welding according to claim 1, **characterized in that** the countervoltage is only connected once an additional first predefined condition has been reached for the product of the instantaneous value of the welding voltage value and the width of the pulse pause (t2) of the welding voltage value.

10. The method for controlling a welding device for MSG (gas metal arc) welding according to claim 1, **characterized in that** the countervoltage is only connected once an additional first predefined condition has been reached for predefined process parameters, in particular luminous radiation, sound, electrical field or magnetic field.

11. The method for controlling a welding device for MSG (gas metal arc) welding according to claim 1, **characterized in that** the countervoltage is disconnected once a second predefined condition has been reached.

12. The method for controlling a welding device for MSG (gas metal arc) welding according to claim 11, **characterized in that** the second predefined condition is determined by the amplitude of the instantaneous value of the welding current.

13. The method for controlling a welding device for MSG (gas metal arc) welding according to claim 11, **characterized in that** the second predefined condition is determined by the product of the instantaneous value of the welding voltage value and welding current.

14. The method for controlling a welding device for MSG (gas metal arc) welding according to claim 11, **characterized in that** the second predefined condition is determined by the quotient of the instantaneous value of the welding voltage value and welding current.

15. The method for controlling a welding device for MSG (gas metal arc) welding according to claim 11, **characterized in that** the second predefined condition is determined by predefined process parameters, in particular luminous radiation, sound, electrical field or magnetic field.

16. The method for controlling a welding device for MSG (gas metal arc) welding according to one of the preceding claims, **characterized in that** the functions for the predefined conditions are generated at least partially through software.

17. The method for controlling a welding device for MSG (gas metal arc) welding according to one of the preceding claims, **characterized in that** the inverter power source is current-regulated.

18. The method for controlling a welding device for MSG (gas metal arc) welding according to one of preceding claims 1 to 16, **characterized in that** the inverter power source is voltage, power or resistance-regulated.

19. The method for controlling a welding device for MSG (gas metal arc) welding according to one of the preceding claims, **characterized in that** the inverter power source operates with different types of regulation in varying process phases.

20. A welding device for MSG (gas metal arc) welding with an alternately clocked inverter power source that feeds at least one current path for supplying power to a welding process (9, 10), wherein a rectifier electrode and at least one reactance coil (7, 8) are provided in series to the welding process, along with a freewheeling diode parallel to the welding process, and wherein a countervoltage source (5) inverse to the inverter voltage (Uinv) given a rising welding current flank can be connected in series in the at least one current path by way of control means (6), wherein synchronizing means (2) actuated by the clock frequency of the inverter power source are provided to actuate both detectors (11) for acquiring a measured value for the instantaneous value of the welding process voltage and the control means (6), **characterized in that** setting means (15) are allocated to the control means (6) in such a way that the countercurrent source is connected as a function of a first predefined value dependent on the instantaneous value of the welding process voltage.

21. The welding device according to claim 20, **characterized in that** the detectors (11) additionally/alternatively are designed to acquire a measured value for the instantaneous value of the welding current.

22. The welding device according to claim 20, **characterized in that** the detectors (11) additionally/alternatively are designed to acquire the instantaneous value of the welding process voltage directly at the welding process.

23. The welding device according to claim 20, **characterized in that** control means (6) and/or synchronizing means (2) and/or predefining means (15) are each incorporated in a microcontroller, preferably a DSP (digital signal processor).

24. The welding device according to claim 20, **characterized in that** the control means (6) exhibit semiconductor switches (3, 4), in particular IGBT's.

## Revendications

1. Procédé pour commander un appareil de soudage pour le soudage MSG (arc sous protection gazeuse avec métal d'apport), dans lequel au moins un trajet de courant pour l'alimentation du processus de soudage (9, 10) est formé au moyen d'une source de courant inverseur alternativement cadencée, une source de contre-tension (5) dirigée dans le sens contraire à la tension d'inversion (Uinv) avec flanc croissant du courant de soudage étant connectée de façon contrôlable en série dans le trajet du courant au nombre minimum de un, des valeurs mesurées de la valeur instantanée de la tension du processus de soudage étant enregistrées de façon synchronisée avec la fréquence de cadence de la source de courant inverseur, **caractérisé en ce que** la contre-tension est connectée pour la valeur instantanée de la tension du processus de soudage lorsqu'on obtient une première condition de spécification.

2. Procédé pour commander un appareil de soudage pour le soudage MSG (soudage à l'arc sous protection gazeuse avec métal d'apport), selon la revendication 1, **caractérisé en ce que** la valeur de tension de soudage momentanée lors de la pause d'impulsion (t2) de la tension d'inversion est enregistrée comme valeur mesurée de la valeur instantanée de la tension du processus de soudage.

3. Procédé pour commander un appareil de soudage pour le soudage MSG (soudage à l'arc sous protection gazeuse avec métal d'apport), selon la revendication 1, **caractérisé en ce que** la largeur de l'impulsion (t1) de la tension d'inversion est enregistrée pour la valeur mesurée de la valeur instantanée de la tension de soudage.

4. Procédé pour commander un appareil de soudage pour le soudage MSG (soudage à l'arc sous protection gazeuse avec métal d'apport), selon la revendication 1, **caractérisé en ce que** l'amplitude de la contre-tension peut être réglée dans la plage de OV jusqu'à une valeur limite supérieure.

5. Procédé pour commander un appareil de soudage pour le soudage MSG (soudage à l'arc sous protection gazeuse avec métal d'apport), selon la revendication 1, **caractérisé en ce que** la contre-tension est connectée uniquement lorsqu'on obtient une première condition de spécification supplémentaire pour la valeur instantanée du courant de soudage.

6. Procédé pour commander un appareil de soudage pour le soudage MSG (soudage à l'arc sous protection gazeuse avec métal d'apport), selon la revendication 1, **caractérisé en ce que** la contre-tension est connectée uniquement lorsqu'on obtient une première condition de spécification supplémentaire pour le produit des valeurs instantanées de la valeur de tension de soudage et du courant de soudage.

7. Procédé pour commander un appareil de soudage pour le soudage MSG (soudage à l'arc sous protection gazeuse avec métal d'apport), selon la revendication 1, **caractérisé en ce que** la contre-tension est connectée uniquement lorsqu'on obtient une première condition de spécification supplémentaire pour le quotient des valeurs instantanées de la valeur de tension de soudage et du courant de soudage.

8. Procédé pour commander un appareil de soudage pour le soudage MSG (soudage à l'arc sous protection gazeuse avec métal d'apport), selon la revendication 1, **caractérisé en ce que** la contre-tension est connectée uniquement lorsqu'on obtient une première condition de spécification supplémentaire pour le produit de la valeur instantanée de la valeur de tension de soudage et de la largeur de l'impulsion (t1).

9. Procédé pour commander un appareil de soudage pour le soudage MSG (soudage à l'arc sous protection gazeuse avec métal d'apport), selon la revendication 1, **caractérisé en ce que** la contre-tension est connectée uniquement lorsqu'on obtient une première condition de spécification supplémentaire pour le produit de la valeur instantanée de la valeur de tension de soudage et de la largeur de la pause d'impulsion (t2).

10. Procédé pour commander un appareil de soudage pour le soudage MSG (soudage à l'arc sous protection gazeuse avec métal d'apport), selon la revendication 1, **caractérisé en ce que** la contre-tension intervient uniquement lorsqu'on obtient une première condition de spécification supplémentaire pour des paramètres de soudage prédéfinis, en particulier le rayonnement de lumière, le son, le champ électrique ou le champ magnétique.

11. Procédé pour commander un appareil de soudage pour le soudage MSG (soudage à l'arc sous protection gazeuse avec métal d'apport), selon la revendication 1, **caractérisé en ce que** la contre-tension est déconnectée lorsqu'on obtient une seconde condition de spécification.

12. Procédé pour commander un appareil de soudage pour le soudage MSG (soudage à l'arc sous protection gazeuse avec métal d'apport), selon la revendication 11, **caractérisé en ce que** la seconde condition de spécification est définie par l'amplitude de la valeur instantanée du courant de soudage.

13. Procédé pour commander un appareil de soudage pour le soudage MSG (soudage à l'arc sous protection gazeuse avec métal d'apport), selon la revendication 11, **caractérisé en ce que** la seconde condition de spécification est définie par le produit des valeurs instantanées de la valeur de tension de soudage et du courant de soudage.

14. Procédé pour commander un appareil de soudage pour le soudage MSG (soudage à l'arc sous protection gazeuse avec métal d'apport), selon la revendication 11, **caractérisé en ce que** la seconde condition de spécification est définie par le quotient des valeurs instantanées de la valeur de tension de soudage et du courant de soudage.

15. Procédé pour commander un appareil de soudage pour le soudage MSG (soudage à l'arc sous protection gazeuse avec métal d'apport), selon la revendication 11, **caractérisé en ce que** la seconde condition de spécification est définie par des paramètres de soudage prédéfinis, en particulier le rayonnement de lumière, le son, le champ électrique ou le champ magnétique.

16. Procédé pour commander un appareil de soudage pour le soudage MSG (soudage à l'arc sous protection gazeuse avec métal d'apport), selon l'une quelconque des revendications précédentes, **caractérisé en ce que** la formation des fonctions pour les conditions de spécification s'effectue au moins en partie par logiciel.

17. Procédé pour commander un appareil de soudage pour le soudage MSG (soudage à l'arc sous protection gazeuse avec métal d'apport), selon l'une quelconque des revendications susmentionnées, **caractérisé en ce que** la source de courant inverseur est régulée au niveau du courant.

18. Procédé pour commander un appareil de soudage pour le soudage MSG (soudage à l'arc sous protection gazeuse avec métal d'apport), selon l'une quelconque des revendications précédentes 1 à 16, **caractérisé en ce que** la source de courant inverseur est régulée au niveau de la tension, de la puissance ou de la résistance.

19. Procédé pour commander un appareil de soudage pour le soudage MSG (soudage à l'arc sous protection gazeuse avec métal d'apport), selon l'une quelconque des revendications susmentionnées, **caractérisé en ce que** la source de courant inverseur travaille dans différentes phases de processus avec différents types de régulation.

20. Procédé pour commander un appareil de soudage pour le soudage MSG (soudage à l'arc sous protection gazeuse avec métal d'apport) avec une source de courant inverseur alimentée par du courant alternatif et cadencée de façon alternative, qui alimente au moins un trajet de courant pour l'alimentation d'un processus de soudage (9, 10), une diode à redresseur et au moins une bobine de réactance (7, 8) étant prévues en série par rapport au processus de soudage et une diode de marche à vide étant prévue parallèlement au processus de soudage, et une source de contre-tension (5) dirigée dans le sens contraire à la tension d'inversion (Uinv) dans le cas d'un flanc croissant du courant de soudage pouvant être connectée en série à l'intérieur du au moins un trajet de courant par des moyens de commande (6), des moyens de synchronisation (2) commandés par la fréquence de cadence de la source de courant inverseur étant prévus, moyens par lesquels aussi bien des moyens de détection (11) pour l'enregistrement d'une valeur mesurée de la valeur instantanée de la tension du processus de soudage que les moyens de commande (6) sont commandés, **caractérisé en ce que** des moyens de spécification (15) sont attribués aux moyens de commande (6) de telle sorte que la mise en circuit de la source de contre-tension s'effectue en fonction d'une première valeur de spécification dépendante de la valeur instantanée de la tension du courant de soudage.

21. Appareil de soudage selon la revendication 20, **caractérisé en ce que** les moyens de détection (11) sont conçus en supplément/comme alternative pour l'enregistrement d'une valeur mesurée de la valeur instantanée du courant de soudage.

22. Appareil de soudage selon la revendication 20, **caractérisé en ce que** les moyens de détection (11) sont conçus en supplément/comme alternative pour l'enregistrement d'une valeur instantanée de la tension du processus de soudage directement sur le processus de soudage.

23. Appareil de soudage selon la revendication 20, **caractérisé en ce que** des moyens de commande (6) et/ou des moyens de synchronisation (2) et/ou des moyens de spécification (15) sont logés respectivement dans un microcontrôleur, de préférence un DSP (processeur de signaux numériques).

24. Appareil de soudage selon la revendication 20, **caractérisé en ce que** les moyens de commande (6) présentent des commutateurs à semi-conducteurs (3, 4), en particulier des IGBT's.
